**Europäisches Patentamt**

(19) **European Patent Office**

**Office européen des brevets**

(11) Veröffentlichungsnummer: **0 091 012**

**B1**

(12) **EUROPÄISCHE PATENTSCHRIFT**

(45) Veröffentlichungstag der Patentschrift:
25.11.87

(51) Int. Cl.⁴: **H 01 H 71/02,** H 01 H 71/10, H 01 H 9/02, H 02 G 3/08

(21) Anmeldenummer: **83102880.8**

(22) Anmeldetag: **23.03.83**

(54) Gehäuse für ein elektrisches Installationsgerät.

(30) Priorität: **01.04.82 DE 3212064**

(43) Veröffentlichungstag der Anmeldung:
**12.10.83 Patentblatt 83/41**

(45) Bekanntmachung des Hinweises auf die Patenterteilung:
**25.11.87 Patentblatt 87/48**

(84) Benannte Vertragsstaaten:
**AT BE CH FR IT LI NL**

(56) Entgegenhaltungen:
**GB-A-773 193**
**US-A-3 069 517**

(73) Patentinhaber: **BROWN, BOVERI & CIE Aktiengesellschaft Mannheim, Kallstadter Strasse 1, D-6800 Mannheim Käfertal (DE)**

(72) Erfinder: **Schmitt, Hermann, Vogelskorb 1, D-6801 Edingen (DE)**
Erfinder: **Sellner, Rudolf, Am Sportplatz 5, D-6901 Eppelheim (DE)**

(74) Vertreter: **Kempe, Wolfgang, Dr., c/o BROWN, BOVERI & CIE AG ZPT Postfach 351, D-6800 Mannheim 31 (DE)**

## Beschreibung

Die Erfindung betrifft ein Gehäuse für ein elektrisches Innstallationsgerät, insbesondere für einen Leitungsschutzschalter, mit durch Vertiefungen in den Wänden des Gehäuses gebildeten Vormarkierungen, entlang derer Wandteile zur Bildung von Durchbrüchen ausbrechbar sind.

Leitungsschutzschalter werden normalerweise einpolig hergestellt, derart, daß jeweils ein Pol mit sämtlichen Funktionsteilen in einem einzigen Gehäuse untergebracht ist. Setzt man mehrere derartige Gehäuse zur Bildung eines mehrpoligen Leitungsschutzschalters zusammen oder sollen zusätzliche Hilfsschalter seitlich angebracht werden, dann müssen bei Bedarf Durchbrüche an den Seiten vorgenommen werden, beispielsweise um elektrische Anschlußleitungen durchzuführen oder um Kupplungselemente vorsehen zu können, mit denen die Bewegung des Schaltwerkes eines Leitungsschutzschalterpoles auf die Schaltwerke der anderen Leitungsschutzschalterpole übertragen werden kann.

Es ist bekannt (US-A-3 069 517), bei allen Gehäuseteilen vor dem Zusammenbau der Geräte entsprechende Durchbrüche vorzusehen, die unmittelbar nach Herstellung der Gehäuse wieder mit einer Abdeckung verschlossen werden. Benötigt man nun einen Durchbruch am Gehäuse, dann wird die Abdeckung am fertigen Gerät nach Bedarf entfernt und weggeworfen.

Bei einer weiteren Ausführung werden die Durchbrüche durch Ausbrechen hergestellt und zwar am Gehäuseeinzelteil vor dem Zusammenbau des Gehäuses und danach ebenfalls mit einer Abdeckung verschlossen. Bei diesen beiden oben beschriebenen bekannten Lösungen ist der Arbeits- und Materialaufwand erheblich.

Es ist weiterhin bekannt (GB-A-773 193), Vormarkierungen in den Wänden der Gehäuseteile vorzusehen, entlang derer die innen befindlichen Wandteile ausbrechbar sind, um die Durchbrüche zu bilden. Um die Ausbrechwerkzeuge allerdings einführen oder einsetzen zu können, waren im allgemeinen immer kleinere Löcher in den Wänden vorgesehen. Bei der letzteren Lösung ist die elektrische Isolierung vermindert bzw. es werden Vorschriften betreffend Kriech- und Luftstrecken, Berührbarkeit von spannungsführenden Teilen mit Drähten usw., oft nicht erfüllt.

Aufgabe der Erfindung ist es daher, ein Gehäuse der eingangs genannten Art zu schaffen, bei dem die Bildung von Durchbrüchen am fertigen Gerät möglich ist, ohne daß in den betreffenden Wänden oder an den betreffenden Stellen kleinere Durchbrüche zum Einsetzen von Ausbrechwerkzeugen oder dergleichen erforderlich sind.

Diese Aufgabe wird erfindungsgemäß dadurch gelöst, daß die Vormarkierungen annähernd kreisförmig sich gegenüberliegend auf beiden Seiten der Gehäusewand angeordnet sind, daß der Innendurchmesser bzw. der Durchmesser, der die Innenkontur der Vormarkierung auf der Gehäuseaußenseite umgibt, größer ist als der äußere Durchmesser der Vormarkierung auf der Gehäuseinnenseite, derart, daß das ausbrechbare Wandteil einen größeren Durchmesser aufweist als der durch das Ausbrechen erzeugte Durchbruch, und daß das Ausbrechen durch Verdrehen des ausbrechbaren Wandteils erfolgt.

In vorteilhafter Weise ist dabei die innere Kontur der Vormarkierung auf der Gehäuseaußenseite polygonartig ausgebildet. Man kann dann, wenn der Polygonzug dreieckig, rechteckig oder quadratisch oder sechseckig ist, ein entsprechend gestaltetes Werkzeug ansetzen, insbesondere bei der sechseckigen Ausgestaltung z. B. einen Ring- oder Steckschlüssel.

Es besteht ferner die Möglichkeit, innerhalb der inneren Kontur der Vormarkierung auf der Gehäuseaußenseite eine Schlitzvertiefung zum Einsetzen eines Schraubendrehers vorzusehen.

Durch die sich gegenüberliegenden Vormarkierungen entsprechend der erfindungsgemäßen Ausgestaltung wird eine Sollbruchstelle geschaffen, die sich durch Verdrehen eines Elementes beispielsweise mittels eines Schraubendrehers bzw. eines Schlüssels zum Brechen bringen läßt, wobei das herausgebrochene Teil in seinen Abmessungen größer ist als der Durchbruch und beim Ausbrechen deshalb nichts ins Innere des Gerätes hineinfallen kann. Darüber hinaus ist die Ausführung so, daß Bruchstücke kaum ins Schalterinnere gelangen können.

Anhand der Zeichnung, in der zwei Ausführungsbeispiele der Erfindung dargestellt sind, sollen die Erfindung sowie weitere vorteilhafte Ausgestaltungen und Verbesserungen und weitere Vorteile der Erfindung näher erläutert werden. Es zeigt:

Fig. 1 eine Aufsicht auf einen Teilbereich eines erfindungsgemäß ausgebildeten Gehäuseteiles,

Fig. 2 eine Schnittansicht gem. der Linie II-II,

Fig. 3 eine Aufsicht auf ein Gehäuse mit einer zweiten erfindungsgemäßen Ausgestaltung der Vormarkierungen,

Fig. 4 eine Schnittansicht gem. der Linie IV-IV der Fig. 3.

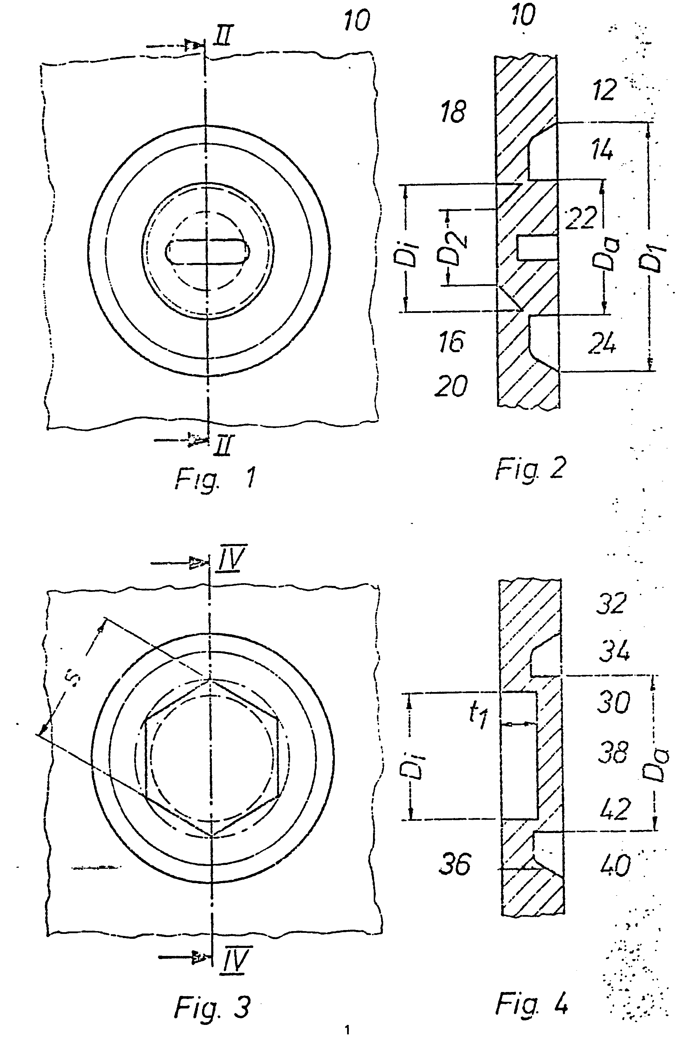

Es sei nun Bezug genommen auf die Fig. 1 und 2.

Die Gehäusewand 10 eines handelsüblichen Leitungsschutzschalters, dessen Einzelheiten nicht näher dargestellt sind, da sie für die Erfindung nicht von Bedeutung sind, besitzt auf der Außenfläche 12 eine erste Vormarkierung 14, der eine zweite Vormarkierung 16 auf der Innenfläche 18 des Gehäuses 10 zugeordnet ist.

Die als Vertiefung ausgebildete erste Vormarkierung 14 ist außen durch eine kegelstumpfförmig sich erweiternde Ringfläche mit einem an der Außenfläche 12 gemessenen Außendurchmesser $D_1$ und innen durch eine zylindrische Ringfläche mit dem Innendurchmesser $D_A$ begrenzt, wogegen die ebenfalls als Vertiefung ausgebildete zweite Vormarkierung 16 außen durch eine zylindrische Ringfläche mit dem Innendurchmesser $D_i$ und innen durch eine kegelstumpfförmig sich nach außen verjüngende Ringfläche mit einem an der Innenfläche 18 gemessenen Innendurchmesser $D_2$ begrenzt ist. Beide Vormarkierungen 14 und 16 sind so tief eingeprägt, daß noch in Form einer die beiden Vormarkierungen verbindenden Ringfläche 20 Restmaterial stehenbleibt. Erfindungsgemäß ist der Außendurchmesser $D_i$ der Vormarkierung 16 kleiner als der Innendurchmesser $D_a$ der Vertiefung 14, so daß die Ringfläche 20 sich kegelstumpfartig nach außen zur Außenfläche 12 hin erweitert. Die Ringfläche 20 ist die kürzeste Verbindungsfläche zwischen den Konturlinien der beiden Vertiefungen.

Im Inneren des Durchmessers $D_A$ ist ein Schlitz 22 vorgesehen, der einen Schraubendreher aufnimmt, so daß das durch die Vorsprünge 14 und 16 gebildete Wandteil 24 verdreht und entlang der Ringfläche 20 aus der Wand 10 herausgebrochen werden kann. Die Ringfläche 20 bildet somit eine Art Sollbruchstelle, entlang derer das Wandteil 24 zur Bildung eines Durchbruches herausgebrochen werden kann. Der Durchbruch, der dadurch gebildet wird, wird begrenzt durch die Außenfläche der Vertiefung 16, die senkrecht zur Fläche 18 des Gehäusewandteiles 10 verläuft, die kegelstumpfartige Ringfläche 20 und die Außenfläche der Vertiefung 14. Man erkennt aus der Fig. 2, daß der Außendurchmesser des herausgebrochenen Wandteiles 24 größer ist als der Innendurchmesser, also hier der kleinste Innendurchmesser des Durchbruches, so daß mit Sicherheit vermieden ist, daß das Wandteil 24 ins Innere des Gehäuses, also auf die linke Seite des Gehäuses 10 bzw. der Gehäusewand 10 hineinfällt. Das Wandteil 24 wird grundsätzlich außerhalb des Gehäuses 10 verbleiben.

Wie oben erwähnt, erfolgt die Verdrehung des Wandteiles 24 mittels eines Schraubendrehers, der in den Schlitz 22 eingesteckt werden kann. In der Ausgestaltung gem. den Fig. 3 und 4 ist das herauszubrechende Wandteil 30 durch eine als Vertiefung ausgebildete Vormarkierung 32 gebildet, deren innere Kontur 34 die Form eines Sechsecks aufweist. Die auf der gegenüberliegenden Seite liegende Vormarkierung ist einfach durch eine kreisförmige Einprägung 36 gebildet, deren Tiefe $T_1$ so gewählt ist, daß die Bodenfläche 38 jenseits der inneren parallel zur Außenfläche 12 verlaufenden Ringfläche 40 (Boden 40) der Vormarkierung liegt, so daß ein Ringbereich 42 kleinster Abmessung gebildet wird, der dann als Sollbruchstelle dient, ein Ringbereich also zwischen der inneren Kontur 34 und dem Boden 40 und der tiefsten Stelle der Vormarkierung 36. Die Verdrehung des Wandteiles 30 erfolgt mittels eines Sechskantsteckschlüssels oder ggf. eines Sechskantringschlüssels. Man erkennt, daß die Schlüsselweite S des Wandteils 30 oder der Durchmesser des äußersten Kreises, der die Kontur 34 umgibt und gleich $D_a$ ist, größer ist als der Durchmesser $D_l$ der Vertiefung 36, so daß auch hierdurch ein Hineinfallen des ausgebrochenen Wandteiles 30 ins Innere des Gehäuses verhindert ist.

Durch die erfindungsgemäße Ausbildung der Gehäusewände an den betreffenden Stellen wird also erreicht, daß sich die Teilstücke 24 und 30 aus der Wand herausbrechen lassen, ohne daß Bruchstücke in das Schalterinnere gelangen können.

Entlang der Sollbruchstelle, die durch die Ringflächen 20 bzw. 42 gebildet ist, läßt sich durch Verdrehen das Wandteil 24 bzw. 30 herausbrechen, wobei die Abmessungen des herausgebrochenen Teiles, also der Wandteile 24 bzw. 30, größer sind als der lichte Durchmesser des nach dem Herausbrechen des Wandteiles 24 bzw. 30 verbliebenen Durchbruches.

Die Erzeugung der Vormarkierung erfolgt bei der Herstellung, also dem Spritzpressen des Gehäuses bzw. der Gehäuseschale. Es besteht weiterhin auch die Möglichkeit, die Ausgestaltungen gem. den Fig. 1 und 2 bzw. 3 und 4 zu kombinieren, d. h. also, den Schlitz 22 bei einer Sechskantkontur 34 vorzusehen und die Vorprägung 16 nicht so wie in Fig. 2 dargestellt, also keilförmig, sondern mittels einer Vertiefung ähnlich der der Fig. 4 zu bilden.

**Patentansprüche**

1. Gehäuse für ein elektrisches Installationsgerät, insbesondere für einen Leitungsschutzschalter, mit durch Vertiefungen in den Wänden des Gehäuses gebildeten Vormarkierungen (14, 16), entlang derer Wandteile zur Bildung von Durchbrüchen ausbrechbar sind, dadurch gekennzeichnet, daß die Vormarkierungen (14, 16) annähernd kreisförmig sich gegenüberliegend auf beiden Seiten der Gehäusewand (10) angeordnet sind, daß der Innendurchmesser ($D_A$) bzw. der Durchmesser, der die Innenkontur der Vormarkierung (32) auf der Gehäuseaußenseite umgibt größer ist als der äußere Durchmesser der Vormarkierung (16, 36) auf der Gehäuseinnenseite, derart, daß das ausbrechbare Wandteil (24, 30) einen größeren Durchmesser aufweist als der durch das Ausbrechen erzeugte Durchbruch, und daß das Ausbrechen durch Verdrehen des ausbrechbaren Wandteils (24, 30) erfolgt.

2. Gehäuse nach Anspruch 1, dadurch gekennzeichnet, daß die innere Kontur der Vormarkierung (32) auf der Gehäuseaußenseite polygonartig ausgebildet ist.

3. Gehäuse nach Anspruch 2, dadurch gekennzeichnet, daß die innere Kontur, dreieckförmig ausgebildet ist.

4. Gehäuse nach Anspruch 2, dadurch gekennzeichnet, daß die innere Kontur viereckig, insbesondere quadratisch, ausgebildet ist.

5. Gehäuse nach Anspruch 2, dadurch gekennzeichnet, daß die innere Kontur sechseckig ausgebildet ist.

6. Gehäuse nach einem der vorigen Ansprüche, dadurch gekennzeichnet, daß innerhalb der inneren Kontur der Vormarkierung (14, 32) auf der Gehäuseaußenseite eine Schlitzvertiefung (22) zum Einsetzen eines Schraubendrehers vorgesehen ist.

7. Gehäuse nach einem der vorigen Ansprüche, dadurch gekennzeichnet, daß die äußere Kontur der Vormarkierung (16, 36) auf der Gehäuseinnenseite kreisförmig ist und den Durchbruch nach Ausbrechen des ausbrechbaren Wandteils (22, 30) begrenzt.

8. Gehäuse nach einem der vorigen Ansprüche, dadurch gekennzeichnet, daß die Vormarkierung (36) auf der Gehäuseinnenseite durch eine topfartige Vertiefung gebildet ist, deren Bodenfläche (38) etwa in Höhe der Bodenfläche (40) der Vormarkierung (32) auf der Gehäuseaußenseite liegt.

## Claims

1. Housing for an electrical installation device, particularly for a line protection switch, with prior markings (14, 16) which are formed by indentations in the walls of the housing, along which wall parts can be broken out for forming break-throughs, characterized in that the prior markings (14, 16) are arranged approximately circular opposite to one another on both sides of the housing wall (10), that the inside diameter $(D_A)$ or the diameter which surrounds the inside contour of the prior marking (32) on the outside of the housing is larger than the outside diameter of the prior marking (16, 36) on the inside of the housing, in such a manner that the wall part (24, 30) which can be broken out has a larger diameter than the break-through created by the breaking out and that the breaking out is carried out by twisting the wall part (24, 30) which can be broken out.

2. Housing according to Claim 1, characterized in that the inner contour of the prior marking (32) is constructed in the manner of a polygon on the outside of the housing.

3. Housing according to Claim 2, characterized in that the inner contour is constructed to be triangular.

4. Housing according to Claim 2, characterized in that the inner contour is constructed to be four-cornered, particularly square.

5. Housing according to Claim 2, characterized in that the inner contour is constructed to be hexagonal.

6. Housing according to one of the previous claims, characterized in that a slot indentation (22) for inserting a screwdriver is provided inside the inner contour of the prior marking (14, 32) on the outside of the housing.

7. Housing according to one of the previous claims, characterized in that the outer contour of the prior marking (16, 36) on the housing inside is circular and delimits the break-through after the wall part (22, 30) which can be broken out has been broken out.

8. Housing according to one of the previous claims, characterized in that the prior marking (36) on the housing inside is formed by a pot-like indentation the bottom area (38) of which is approximately at the level of the bottom area (40) of the prior marking (32) on the outside of the housing.

## Revendications

1. Boîtier pour appareil d'installation électrique, notamment pour disjoncteur de protection de ligne, comportant des empreintes (14, 16) en dépression formées dans les parois de ce boîtier, des parties de paroi étant amovibies par rupture le long de ces empreintes afin de former des ajours, caractérisé par le fait que lesdites empreintes (14, 16) sons aménagées approximativement en forme de cercle, en vis-à-vis, sur les deux côtés de la paroi (10), par le fait que le diamètre intérieur $(D_A)$ de l'empreinte (32) ou le diamètre du cercle que entoire le contour intérieur de l'empreinte (32), sur le côté extérieur du boîtier, est plus grand que le diamètre extérieur de l'empreinte (16, 36) sur le côté intérieur du boîtier, de manière que la partie de paroi (24, 30) amovible par rupture présente un plus grand diamètre que l'ajour engendré par la rupture, et que l'enlèvement par rupture est réalisé par torsion de la partie de paroi (24, 30) amovible par rupture.

2. Boîtier selon revendication 1, caractérisé par le fait que le contour intérieur de l'empreinte sur le côté extérieur du boîtier est polygonal.

3. Boîtier selon revendication 2, caractérisé par le fait que le contour intérieur est triangulaire.

4. Boîtier selon revendication 2, caractérisé par le fait que le contour intérieur est quadrangulaire, notamment carré.

5. Boîtier selon revendication 2, caractérisé par le fait que le contour intérieur est hexagonal.

6. Boîtier selon l'une quelconque des revendications précédentes, caractérisé par le fait qu'une dépression en forme de fente (22) pour insertion d'une lame de tournevis est prévue à l'intérieur du contou intérieur de l'empreinte (14, 32), sur le côté extérieur du boîtier.

7. Boîtier selon l'une quelconque des revendications précedentes, caractérisé par le fait que le contour extérieur de l'empreinte (16, 36) sur le côté interieur du boîtier est circuiaire et borde l'ajour après enlèvement de la partie de paroi amovible par rupture (22, 30).

8. Boîtier selon l'une quelconque des revendications précedentes, caractérisé par le fait que l'empreinte (36) sur le côté intérieur du boîtier est formée par une dépression en forme de godet dont le fond (38) est situé à peu près à hauteur du fond (40) de l'empreinte (32) sur le côté extérieur du boîtier.

0 091 012

Fig. 1

Fig. 2

Fig. 3

Fig. 4

1